# EUROPEAN PATENT APPLICATION

(11) **EP 4 489 509 A1**
(43) Date of publication of application: **08.01.2025**
(21) Application number: 23762806.0
(22) Date of filing: 23.02.2023
(51) Int. Cl.: H04W 76/19

(54) **RADIO LINK FAILURE PROCESSING METHOD AND APPARATUS, COMMUNICATION DEVICE, AND STORAGE MEDIUM**

(30) Priority: 02.03.2022 CN 202210200255
(71) Applicant: VIVO MOBILE COMMUNICATION CO., LTD., Dongguan, Guangdong 523863 (CN)
(72) Inventor: LIU, Jinhua, Dongguan, Guangdong 523863 (CN); WANG, Huan, Dongguan, Guangdong 523863 (CN); PENG, Shuyan, Dongguan, Guangdong 523863 (CN); SONG, Zhenyuan, Dongguan, Guangdong 523863 (CN)
(74) Representative: Lavoix
(86) International application number: PCT/CN2023/077840
(87) International publication number: WO 2023/165406

(57) **Abstract**

This application discloses a radio link failure processing method and apparatus, a communication device, and a storage medium, and pertains to the field of communication technologies. The radio link failure processing method in embodiments of this application includes: receiving, by a first base station, a radio link connection establishment request from a layer 1 forwarding node; and obtaining first information based on the radio link connection establishment request. The first information includes at least one of the following: context information of an MT unit of the layer 1 forwarding node; context information of a forwarding unit of the layer 1 forwarding node; topology information of a forwarding network in which the layer 1 forwarding node is located; information about a list of UEs served by the layer 1 forwarding node; and context information of all or some UEs served by the layer 1 forwarding node.

## Description

### CROSS-REFERENCE TO RELATED APPLICATIONS

This application claims priority to Chinese Patent Application No. 202210200255.7, filed in China on March 2, 2022, which is incorporated herein by reference in its entirety.

### TECHNICAL FIELD

This application pertains to the field of communication technologies, and specifically, to a radio link failure processing method and apparatus, a communication device, and a storage medium.

### BACKGROUND

In the related art, UE may monitor quality of a radio link. When the quality of the radio link becomes unable to meet a minimum communication quality requirement of the UE, the UE may determine that the radio link is unavailable, that is, determine that the radio link fails; and reselect a cell and reestablish a radio link connection. This technology related to a radio link failure may be applied to a layer 1 forwarding node. However, due to characteristics of the layer 1 forwarding node as a repeater node, after a radio link failure occurs in the layer 1 forwarding node, service interruption time of UE served by the layer 1 forwarding node is long.

### SUMMARY

Embodiments of this application provide a radio link failure processing method and apparatus, a communication device, and a storage medium, to resolve a problem that service interruption time of UE served by the layer 1 forwarding node is long after a radio link failure occurs in a layer 1 forwarding node in the related art.

According to a first aspect, a radio link failure processing method is provided, and includes:
receiving, by a first base station, a radio link connection establishment request from a layer 1 forwarding node; and
obtaining, by the first base station, first information based on the radio link connection establishment request, where the first information includes at least one of the following:
context information of a mobile terminal MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

According to a second aspect, a radio link failure processing method is provided, and includes:
receiving, by a second base station, a first request from a first base station, where the second base station is a serving base station before a radio link failure occurs in a layer 1 forwarding node, and the first base station is a serving base station after the radio link failure occurs in the layer 1 forwarding node; and
sending, by the second base station, first information to the first base station, where
the first information includes at least one of the following:
context information of an MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

According to a third aspect, a radio link failure processing method is provided, and includes:
determining, by a layer 1 forwarding node, that a radio link failure occurs; and
performing, by the layer 1 forwarding node, a first operation, where
the first operation includes at least one of the following:
selecting a target cell according to a preset rule;
during radio link connection reestablishment, sending second information to a target base station, where the second information includes at least one of the following: an identifier of an MT unit of the layer 1 forwarding node and an identifier of the layer 1 forwarding node;
stopping forwarding behavior of a forwarding unit of the layer 1 forwarding node; and
after a target cell is selected, forwarding a signal of the target cell by using a forwarding unit of the layer 1 forwarding node.

According to a fourth aspect, a radio link failure processing apparatus is provided and applied to a first base station, and includes:
a first receiving module, configured to receive a radio link connection establishment request from a layer 1 forwarding node; and
an obtaining module, configured to obtain first information based on the radio link connection establishment request, where the first information includes at least one of the following:
context information of a mobile terminal MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

According to a fifth aspect, a radio link failure processing apparatus is provided and applied to a second base station, and includes:
a second receiving module, configured to receive a first request from a first base station, where the second base station is a serving base station before a radio link failure occurs in a layer 1 forwarding node, and the first base station is a serving base station after the radio link failure occurs in the layer 1 forwarding node; and
a sending module, configured to send first information to the first base station, where the first information includes at least one of the following:
context information of an MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

According to a sixth aspect, a radio link failure processing apparatus is provided and applied to a layer 1 forwarding node, and includes:
a determining module, configured to determine that a radio link failure occurs; and
an execution module, configured to perform a first operation, where
the first operation includes at least one of the following:
selecting a target cell according to a preset rule;
during radio link connection reestablishment, sending second information to a target base station, where the second information includes at least one of the following: an identifier of an MT unit of the layer 1 forwarding node and an identifier of the layer 1 forwarding node;
stopping forwarding behavior of a forwarding unit of the layer 1 forwarding node; and
after a target cell is selected, forwarding a signal of the target cell by using a forwarding unit of the layer 1 forwarding node.

According to a seventh aspect, a network-side device is provided. The network-side device includes a processor and a memory. The memory stores a program or instructions capable of running on the processor. When the program or the instructions are executed by the processor, the steps of the method according to the first aspect are implemented, or the steps of the method according to the second aspect are implemented, or the steps of the method according to the third aspect are implemented.

According to an eighth aspect, a network-side device is provided, and includes a processor and a communication interface. For example, when the network-side device is a first base station, the communication interface is configured to: receive a radio link connection establishment request from a layer 1 forwarding node, and obtain first information based on the radio link connection establishment request; when the network-side device is a second base station, the communication interface is configured to: receive a first request from a first base station, and send first information to the first base station, where the first information includes at least one of the following: context information of an MT unit of a layer 1 forwarding node, context information of a forwarding unit of a layer 1 forwarding node, topology information of a forwarding network in which a layer 1 forwarding node is located, information about a list of UEs served by a layer 1 forwarding node, and context information of all or some UEs served by a layer 1 forwarding node; or when the network-side device is a layer 1 forwarding node, the processor is configured to: determine that a radio link failure occurs, and perform a first operation. The first operation includes at least one of the following: selecting a target cell according to a preset rule; during radio link connection reestablishment, sending second information to a target base station, where the second information includes at least one of the following: an identifier of an MT unit of the layer 1 forwarding node and an identifier of the layer 1 forwarding node; stopping forwarding behavior of a forwarding unit of the layer 1 forwarding node; and after a target cell is selected, forwarding a signal of the target cell by using a forwarding unit of the layer 1 forwarding node.

According to a ninth aspect, a communication system is provided, and includes at least two of a first base station, a second base station, and a layer 1 forwarding node. The first base station may be configured to perform the steps of the radio link failure processing method according to the first aspect, the second base station may be configured to perform the steps of the radio link failure processing method according to the second aspect, and the layer 1 forwarding node may be configured to perform the steps of the radio link failure processing method according to the third aspect. The first base station is a serving base station after a radio link failure occurs in the layer 1 forwarding node, and the second base station is a serving base station before the radio link failure occurs in the layer 1 forwarding node.

According to a tenth aspect, a readable storage medium is provided. The readable storage medium stores a program or instructions. When the program or the instructions are executed by a processor, the steps of the method according to the first aspect are implemented, or the steps of the method according to the second aspect are implemented, or the steps of the method according to the third aspect are implemented.

According to an eleventh aspect, a chip is provided. The chip includes a processor and a communication interface. The communication interface is coupled to the processor. The processor is configured to run a program or instructions, to implement the steps of the method according to the first aspect, or to implement the steps of the method according to the second aspect, or to implement the steps of the method according to the third aspect.

According to a twelfth aspect, a computer program/program product is provided. The computer program/program product is stored in a storage medium. The computer program/program product is executed by at least one processor, to implement the steps of the method according to the first aspect, or to implement the steps of the method according to the second aspect, or to implement the steps of the method according to the third aspect.

In the embodiments of this application, by obtaining the context information of the MT unit of the layer 1 forwarding node, the context information of the forwarding unit of the layer 1 forwarding node, and/or the topology information of the forwarding network in which the layer 1 forwarding node is located, the first base station, that is, the serving base station after the radio link failure occurs in the layer 1 forwarding node, may be enabled to obtain the information related to the layer 1 forwarding node, and use the information to configure the layer 1 forwarding node, thereby reducing time for radio link connection reestablishment performed after the radio link failure occurs in the layer 1 forwarding node, and optimizing a reestablishment process. By obtaining the information about the list of the UEs served by the layer 1 forwarding node and/or the context information of the all or some UEs served by the layer 1 forwarding node, the first base station, that is, the serving base station after the radio link failure occurs in the layer 1 forwarding node, may be enabled to obtain the information related to the UEs served by the layer 1 forwarding node, and use the information to configure the UEs, thereby reducing radio link connection reestablishment time of the UEs served by the layer 1 forwarding node, and thus reducing service interruption time of the UEs.

### BRIEF DESCRIPTION OF THE DRAWINGS

FIG. 1 is a block diagram of a wireless communication system to which an embodiment of this application is applicable;
FIG. 2 is a diagram of a network structure of a reconfigurable intelligent surface (Reconfigurable Intelligent Surface, RIS) node according to an embodiment of this application;
FIG. 3 is a diagram of a network structure of a network controlled repeater (Network Controlled Repeater, NCR) node according to an embodiment of this application;
FIG. 4 is a flowchart of a radio link failure processing method according to an embodiment of this application;
FIG. 5 is a flowchart of another radio link failure processing method according to an embodiment of this application;
FIG. 6 is a flowchart of another radio link failure processing method according to an embodiment of this application;
FIG. 7 is a diagram of a structure of a radio link failure processing apparatus according to an embodiment of this application;
FIG. 8 is a diagram of a structure of another radio link failure processing apparatus according to an embodiment of this application;
FIG. 9 is a diagram of a structure of another radio link failure processing apparatus according to an embodiment of this application;
FIG. 10 is a diagram of a structure of a communication device according to an embodiment of this application; and
FIG. 11 is a diagram of a structure of a network-side device according to an embodiment of this application.

### DETAILED DESCRIPTION

The technical solutions in embodiments of this application are clearly described in the following with reference to accompanying drawings in embodiments of this application. Apparently, the described embodiments are some rather than all of embodiments of this application. All other embodiments obtained by a person of ordinary skill in the art based on embodiments of this application fall within the protection scope of this application.

In the specification and the claims of this application, terms such as "first" and "second" are used to distinguish between similar objects rather than to describe a specific sequence or order. It should be understood that terms used in this way are exchangeable in a proper case, so that embodiments of this application can be implemented in an order different from the order illustrated or described herein. The objects distinguished by "first" and "second" are usually of a same category, and a quantity of the objects is not limited. For example, there may be one or more first objects. In addition, in the specification and the claims, "and/or" indicates at least one of connected objects, and the character "/" usually indicates an "or" relationship between associated objects.

It should be noted that technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single-carrier Frequency Division Multiple Access, SC-FDMA), and other systems. Terms "system" and "network" in the embodiments of this application are usually used interchangeably. The described technologies may be applied to the systems and radio technologies mentioned above, and may also be applied to other systems and radio technologies. A new radio (New Radio, NR) system is described in the following descriptions for example purposes, and NR terms are used in most of the following descriptions. However, the technologies may also be applied to applications other than an NR system application, for example, a 6^{th} generation (6^{th} Generation, 6G) communication system.

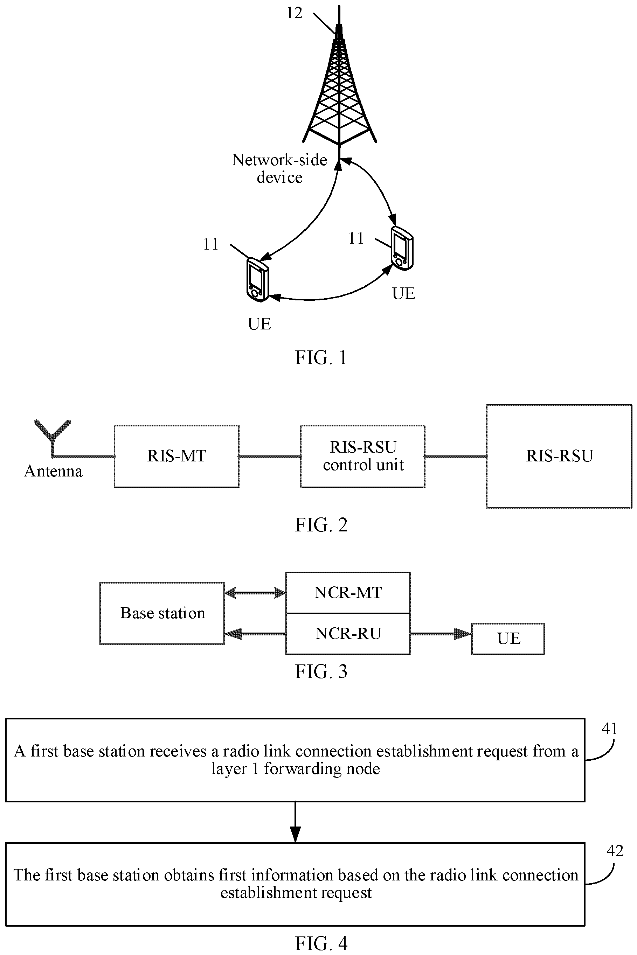

FIG. 1 is a block diagram of a wireless communication system to which an embodiment of this application is applicable. The wireless communication system includes UEs 11 and a network-side device 12. UE 11 may be a UE-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart household (home devices with a wireless communication function, such as a refrigerator, a television, a washing machine, or furniture), a game console, a personal computer (personal computer, PC), a teller machine, or a self-service machine. A wearable device includes a smartwatch, a smart band, smart headphones, smart glasses, smart jewelry (a smart bangle bracelet, a smart chain bracelet, a smart ring, a smart necklace, a smart anklet, a smart ankle chain, or the like), a smart wristband, smart clothing, or the like. It should be noted that a specific type of the UE 11 is not limited in this embodiment of this application. The network-side device 12 may include an access network device or a core network device. An access network device may also be referred to as a radio access network device, a radio access network (Radio Access Network, RAN), a radio access network function, or a radio access network unit. An access network device may include a base station, a wireless local area network (Wireless Local Area Network, WLAN) access point, a WiFi node, or the like. A base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another proper term in the art. Provided that same technical effects are achieved, the base station is not limited to a specific technical term. It should be noted that base stations in the NR system are only used as an example for description in the embodiments of this application, but a specific type of base stations is not limited.

To facilitate understanding of the embodiments of this application, the following content is described first.

In the embodiments of this application, a layer 1 forwarding node is controlled by a network, is a layer 1 node configured to forward radio frequency signals, and may be a reconfigurable intelligent surface (Reconfigurable Intelligent Surface, RIS) node or a network controlled repeater (Network Controlled Repeater, NCR) node. An RIS node is implemented in different manners, and may be modeled as a mobile terminal (Mobile Termination, MT) unit and a reflection surface unit (Reflection Surface Unit, RSU). FIG. 2 is a diagram of a logical structure of an RIS node. An RIS-MT unit may be configured to establish a radio link connection between the RIS node and a serving base station. The RIS node sends a measurement report thereof to the base station, receives reflection control signaling sent by the base station, and the like. An RIS-RSU may be configured to reflect and transmit signals, including a synchronization signal block (Synchronization Signal and PBCH block, SSB), a system message, uplink and downlink dedicated signaling, uplink and downlink control channels, uplink and downlink data signals, and the like, between the base station and UE. For example, the RIS-MT may use a separate antenna (as shown in FIG. 2), or may share an antenna on the RIS-RSU. As shown in FIG. 2, an RIS-RSU control unit (for example, a panel controller) may be disposed between the RIS-MT and the RIS-RSU. The RIS-MT may send a received RIS-RSU control command to the RIS-RSU control unit, so that the RIS-RSU control unit controls the RIS-RSU. The base station may control transmit parameters of the RIS-RSU, including a reflected beam parameter and the like, by sending signaling for controlling the RIS-RSU to the RIS-MT. The RIS-RSU unit of the RIS node may be a passive radio signal reflection panel, and include a reflecting array that includes several reflecting elements. The base station may control a reflected beam of the RIS-RSU by configuring a phase and amplitude matrix of the reflecting array.

A reflection effect of the RIS-RSU may bring about a plurality of impacts, as described in the following.
(1) Valid reflection: Under control of the base station, a target signal is reflected in a direction of a target UE, so that a valid signal received by the target UE is strengthened.
(2) Interference reflection: In a case that signals are not scheduled or reflected by the base station, all received signals are reflected in a direction in which a current reflecting array points, causing interference.
(3) Out-of-band reflection: A band outside a target carrier bandwidth is reflected, causing interference.

Optionally, the base station may provide a service to the UE through the RIS node. The RIS node is configured to expand coverage of the base station or provide coverage of a shadow area. The base station may control a direction of a reflected beam of the RIS node to point to the target UE. This means that the base station may know which RIS node provides a reflection service for UE. For the UE for which the service is provided, the most important is link quality. As for whether radio signals are sent and received directly between the base station and the UE or whether radio signals are forwarded through the RIS node between the base station and the UE, the UE does not necessarily know. In a reflection process, the RIS node forwards, by means of a large quantity of reflector antennas on the reflection panel and reflection beamforming, a signal from the base station to the UE by using a reflected beam, to enhance a link gain and adjust a signal propagation direction.

Optionally, an NCR node, which is a layer 1 forwarding node, may also be referred to as a smart repeater (smart repeater). The NCR node is configured to expand a coverage area of a cell, including receiving and amplifying a downlink signal from an upstream base station to increase strength of the signal that reaches UE, and receiving and amplifying an uplink signal from the UE to increase strength of the uplink signal from the UE to the upstream base station. The NCR node may accept control from the upstream base station, that is, the base station may control transmit parameters of the smart repeater, such as a switch and a transmit beam of the NCR node, so as to improve operation efficiency of the repeater and reduce interference. A network structure shown in FIG. 3 includes three network nodes. An intermediate network node is an NCR node. The NCR node includes an MT unit and a repeater unit (Repeater Unit, RU). However, that the NCR node includes only one module of the MT and the RU is not excluded. The MT may establish a connection to an upstream base station. The base station exchanges control signaling with the NCR node through the MT, and may indicate transmission/reception-related parameters of the MT/RU of the NCR node.

Similar to the RIS node, the NCR node is connected to the base station and controlled by the base station. To be specific, the base station sends control information to the NCR node through the MT of the NCR node, and controls radio frequency RF uplink and downlink power/amplification factor, a beam parameter, uplink and downlink configuration, and the like that are of the NCR node. Unlike the RIS node, the RU unit of the NCR node is an active signal amplifier, which may amplify and send a received signal.

The RIS node mainly operates at a high frequency, but a high-frequency radio wave has a weak diffraction capability. Therefore, when an environment changes, there is a high probability that a radio wave propagation link is blocked. It is necessary to optimize a process to reduce, when an RLF occurs, service interruption time of UE served by the RIS node.

Optionally, in the following embodiments of this application, a forwarding unit may be the RIS-RSU unit of the RIS node, or may be the RU unit of the NCR node; and an MT unit may be the MT of the RIS node, or may be the MT unit of the NCR node. This is not limited.

Optionally, scenarios to which the embodiments of this application are applicable include but are not limited to Reconfigurable Intelligent Surface (RIS) deployment or a Network Controlled Repeater (NCR) scenario, for example, mainly in the 5G advanced (advanced) field and the 6G field.

Optionally, a forwarding operation of the layer 1 forwarding node mentioned in the embodiments of this application includes that the NCR node amplifies and transmits a received target radio signal by using a radio frequency device, or the RIS node reflects a collected target signal by using a reflection panel.

With reference to the accompanying drawings, the following describes, in detail based on some embodiments and application scenarios thereof, a radio link failure processing method and apparatus, a communication device, and a storage medium that are provided in the embodiments of this application.

FIG. 4 is a flowchart of a radio link failure processing method according to an embodiment of this application. The method is performed by a first base station. The first base station is a serving base station after a radio link failure (Radio Link Failure, RLF) occurs in a layer 1 forwarding node. As shown in FIG. 4, the method includes the following steps.

Step 41: The first base station receives a radio link connection establishment request from the layer 1 forwarding node.

After a radio link failure occurs, the layer 1 forwarding node may reselect a cell, and initiate a radio link connection establishment request to a base station to which the selected target cell belongs.

Step 42: The first base station obtains first information based on the radio link connection establishment request.

In this embodiment, the first information may include at least one of the following:
context information of an MT unit of the layer 1 forwarding node;
context information of a forwarding unit of the layer 1 forwarding node;
topology information of a forwarding network in which the layer 1 forwarding node is located, which is applicable to a scenario in which there are a plurality of hops of layer 1 forwarding nodes, especially RIS nodes included;
information about a list of UEs served by the layer 1 forwarding node; and
context information of all or some UEs served by the layer 1 forwarding node, for example, a second base station may push, to the first base station, context information of UE that is close to the layer 1 forwarding node.

In this way, by obtaining the context information of the MT unit of the layer 1 forwarding node, the context information of the forwarding unit of the layer 1 forwarding node, and/or the topology information of the forwarding network in which the layer 1 forwarding node is located, the first base station may be enabled to obtain the information related to the layer 1 forwarding node, and use the information to configure the layer 1 forwarding node, thereby reducing time for radio link connection reestablishment performed after the radio link failure occurs in the layer 1 forwarding node, and optimizing a reestablishment process. By obtaining the information about the list of the UEs served by the layer 1 forwarding node and/or the context information of the all or some UEs served by the layer 1 forwarding node, the first base station may be enabled to obtain the information related to the UEs served by the layer 1 forwarding node, and use the information to configure the UEs, thereby reducing radio link connection reestablishment time of the UEs served by the layer 1 forwarding node, and thus reducing service interruption time of the UEs.

In some embodiments, the base station to which the target cell selected by the layer 1 forwarding node after the radio link failure occurs belongs is the first base station, which may be a serving base station before the radio link failure occurs in the layer 1 forwarding node, or may be a new serving base station. In a case that the first base station is the serving base station before the radio link failure occurs in the layer 1 forwarding node, the first base station may obtain the first information based on storage of the first base station. In a case that the first base station is a new serving base station, the first base station may obtain the first information from the serving base station used before the radio link failure occurs in the layer 1 forwarding node.

Optionally, the obtaining first information based on the radio link connection establishment request may include sending, by the first base station, a first request to the second base station. The first request is used to obtain the first information, and the second base station is the serving base station before the radio link failure occurs in the layer 1 forwarding node.

In some embodiments, the first request is optionally a context request.

Optionally, the first request may include second information. The second information includes at least one of the following: an identifier of the MT unit of the layer 1 forwarding node and an identifier of the layer 1 forwarding node. This can help the second base station identify the layer 1 forwarding node.

Optionally, before sending the first request to the second base station, the first base station may receive the second information from the layer 1 forwarding node, so as to initiate the first request by using the received second information.

Optionally, the obtaining first information based on the radio link connection establishment request may include obtaining, by the first base station, the first information based on the radio link connection establishment request and the second information. For example, the second information may be carried in the radio link connection establishment request, or sent separately.

In some embodiments, before sending a context request to the second base station, the first base station may receive the second information from the layer 1 forwarding node. The second information includes the at least one of the following: the identifier of the MT unit of the layer 1 forwarding node and the identifier of the layer 1 forwarding node. Then, the first base station may send the context request to the second base station based on the received second information. In this case, the context request includes the second information and is used to request the context information of the layer 1 forwarding node. To be specific, when the selected target cell belongs to the first base station that is different from the second base station, the layer 1 forwarding node may send the identifier of the MT unit of the layer 1 forwarding node, for example, a cell radio network temporary identifier (Cell Radio Network Temporary Identifier, C-RNTI), and/or the identifier (Identity, ID) of the layer 1 forwarding node to the first base station during radio link connection reestablishment. After that, the first base station may send the received C-RNTI and/or ID of the layer 1 forwarding node to the second base station through the context request, to request the context information of the layer 1 forwarding node. After receiving the context request that is based on the C-RNTI and/or the ID of the layer 1 forwarding node, the second base station sends the context information of the MT unit and/or the context information of the forwarding unit to the first base station.

In some other embodiments, during radio link connection reestablishment between the layer 1 forwarding node and the first base station, the first base station may send, to the second base station, a context request about the UEs served by the layer 1 forwarding node. Then, the second base station may determine the list of the UEs served by the layer 1 forwarding node, and push the context information of the all or some UEs to the first base station.

In some other embodiments, when the layer 1 forwarding node reconnects to the first base station, and the second base station receives the context request about the layer 1 forwarding node from the first base station, the second base station may determine the list of the UEs served by the layer 1 forwarding node, and proactively push the context information of the all or some UEs to the first base station.

Optionally, in addition to being used as a context of ordinary UE, the context information of the MT unit may include at least one of the following:
context information used for configuring a physical channel for controlling the forwarding unit of the layer 1 forwarding node, for example, context information of configuration of a related physical downlink control channel (Physical Downlink Control Channel, PDCCH) and configuration of a control resource set (Control resource set, CORESET) of the physical downlink control channel may be included, and if the physical channel is a PDCCH and is used for sending a dedicated RNTI, an RNTI value may be further included; and
beam configuration information that is of the forwarding unit controlled by the second base station and that is for forwarding a synchronization signal block (Synchronization Signal and PBCH block, SSB) and/or a channel state information-reference signal (Channel State Information- Reference Signal, CSI-RS).

Optionally, the context information of the forwarding unit may include at least one of the following:
capability information of the forwarding unit;
configuration information of the forwarding unit; and
processing delay information of the layer 1 forwarding node.

Optionally, the capability information of the forwarding unit may include at least one of the following:
(1) at least one of a quantity of reflecting elements, a quantity of horizontal reflection channels, and a quantity of vertical reflection channels that are of a reflection panel of the forwarding unit;
(2) a total quantity of reflection channels of a reflection panel of the forwarding unit, for example, the total quantity may be a quantity of reflected beams generated simultaneously;
(3) a range of an oblique angle of incidence of an incoming wave that is able to be effectively reflected by the forwarding unit;
(4) reflection gain information of a reflection panel of the forwarding unit;
(5) at least one of a quantity of antenna units, a quantity of horizontal radio frequency channels, and a quantity of vertical radio frequency channels that are of a forwarding antenna panel of the forwarding unit;
(6) a total quantity of radio frequency channels of a forwarding antenna panel of the forwarding unit;
(7) forwarding gain range information of the forwarding unit; and
(8) operating frequency range information of the forwarding unit.

It may be understood that the foregoing (1) to (4) are mainly applicable to a forwarding unit of an RIS node, and the foregoing (5) and (6) are mainly applicable to a forwarding unit of an NCR node.

Optionally, the configuration information of the forwarding unit may include at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit, where the on/off pattern may be that the forwarding unit is turned on for forwarding in some time slots and/or orthogonal frequency division multiplexing (Orthogonal Frequency Division Multiplexing, OFDM) symbols, to strengthen signals; and forwarding is turned off in some other time slots and/or OFDM symbols, to reduce interference and noise that are caused by unnecessary forwarding.

Optionally, the processing delay information of the layer 1 forwarding node is, for example, configuration information of a delay from reception of a reflected beam-controlling PDCCH to generation of a reflected beam by the layer 1 forwarding node.

Optionally, the topology information of the forwarding network in which the layer 1 forwarding node is located includes at least one of the following:
all or some context information of an upstream layer 1 forwarding node of the layer 1 forwarding node; and
all or some context information of a downstream layer 1 forwarding node of the layer 1 forwarding node.

In some embodiments, the all or some context information of the upstream layer 1 forwarding node of the layer 1 forwarding node may include: all or some context information of an MT unit of the upstream layer 1 forwarding node, and/or all or some context information of a forwarding unit of the upstream layer 1 forwarding node. For the context information of the MT unit and the forwarding unit, refer to the foregoing content. Details are not described herein again.

In some other embodiments, the all or some context information of the downstream layer 1 forwarding node of the layer 1 forwarding node may include: all or some context information of an MT unit of the downstream layer 1 forwarding node, and/or all or some context information of a forwarding unit of the downstream layer 1 forwarding node. For the context information of the MT unit and the forwarding unit, refer to the foregoing content. Details are not described herein again.

Optionally, in a case that the layer 1 forwarding node has the downstream layer 1 forwarding node and/or upstream layer 1 forwarding node, the first information may further include at least one of the following:
the context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node, for example, the information about the UE may be a C-RNTI, an I-RNTI, or the like that is used to identify the UE.

It may be understood that the context information of the downstream layer 1 forwarding node and/or upstream layer 1 forwarding node is similar to the foregoing context information of the layer 1 forwarding node, reference may be made to the foregoing content, and details are not described herein again; the capability information of the downstream layer 1 forwarding node and/or upstream layer 1 forwarding node is similar to the foregoing capability information of the layer 1 forwarding node, reference may be made to the foregoing content, and details are not described herein again; and the topology information of the forwarding network in which the downstream layer 1 forwarding node and/or upstream layer 1 forwarding node are/is located is similar to the foregoing topology information of the forwarding network in which the layer 1 forwarding node is located, reference may be made to the foregoing content, and details are not described herein again.

Optionally, the context information of the all or some UEs may include first indication information, where the first indication information is used to indicate the identifier of the layer 1 forwarding node. Alternatively, in a case that the first information includes the context information of the all or some UEs, the first information may further include second indication information, where the second indication information is used to indicate the identifier of the layer 1 forwarding node. In other words, the UE context information pushed by the second base station may include an indication parameter, indicating the ID information of the layer 1 forwarding node that serves the UEs; or when the UE context information is pushed, an indication parameter may be added, indicating the ID information of the layer 1 forwarding node that serves the UEs. This may help the first base station learn of the layer 1 forwarding node that serves the UEs.

Optionally, the context information of the all or some UEs may include parameter information of a forwarded beam used for serving the all or some UEs, including a reflected beam serial number, a horizontal reflection angle, a vertical reflection angle, and the like. The forwarded beam used for serving the all or some UEs may be understood as follows: The forwarded beam is used to transmit information to the corresponding UEs.

Optionally, during establishment of a radio link connection between the layer 1 forwarding node and the first base station, after receiving a radio link connection request from first UE, the first base station may first determine whether context information of the first UE has been received from the second base station. Then, if the context information of the first UE has been received, the first UE is configured based on the context information of the first UE; or if the context information of the first UE is not received, the context information of the first UE is requested from the second base station, so that the first UE is configured by using the requested context information. In other words, in a case that the first base station has received the context information of the first UE, the first base station configures the first UE based on the context information of the first UE; or in a case that the first base station does not receive the context information of the first UE, the first base station requests the context information of the first UE from the second base station, and configures the first UE based on the context information of the first UE.

Optionally, in a case that the first information does not include the context information of the all or some UEs, when the first base station requires context information of second UE served by the layer 1 forwarding node, the first base station may request the context information of the second UE from the second base station, so as to configure the second UE by using the requested context information.

In some embodiments, the second base station may send, to the first base station, only the information about the list of the UEs served by the layer 1 forwarding node (for example, a C-RNTI/I-RNTI list). After that, when requiring context information of related UE, the first base station requests to obtain the context information of the related UE from the second base station.

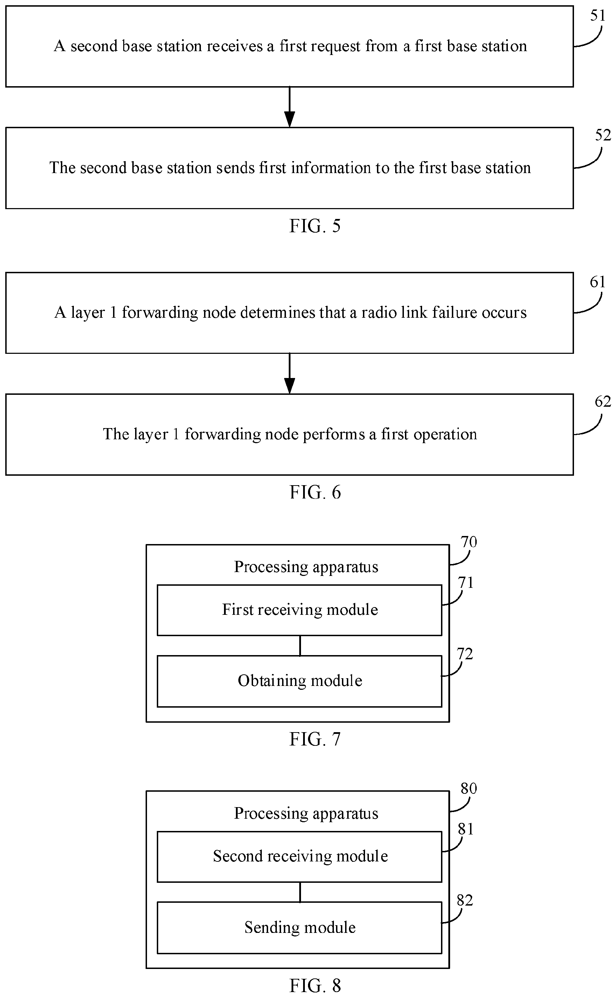

FIG. 5 is a flowchart of a radio link failure processing method according to an embodiment of this application. The method is performed by a second base station. The second base station is a serving base station before a radio link failure occurs in a layer 1 forwarding node. As shown in FIG. 5, the method includes the following steps.

Step 51: The second base station receives a first request from a first base station.

In this embodiment, the first base station is a serving base station after the radio link failure occurs in the layer 1 forwarding node.

Step 52: The second base station sends first information to the first base station.

In this embodiment, the first information may include at least one of the following:
context information of an MT unit of the layer 1 forwarding node;
context information of a forwarding unit of the layer 1 forwarding node;
topology information of a forwarding network in which the layer 1 forwarding node is located, which is applicable to a scenario in which there are a plurality of hops of layer 1 forwarding nodes, especially RIS nodes included;
information about a list of UEs served by the layer 1 forwarding node; and
context information of all or some UEs served by the layer 1 forwarding node, for example, the second base station may push, to the first base station, context information of UE that is close to the layer 1 forwarding node.

In this way, through sending, to the first base station, of the context information of the MT unit of the layer 1 forwarding node, the context information of the forwarding unit of the layer 1 forwarding node, and/or the topology information of the forwarding network in which the layer 1 forwarding node is located, the first base station may be enabled to obtain the information related to the layer 1 forwarding node, and use the information to configure the layer 1 forwarding node, thereby reducing time for radio link connection reestablishment performed after the radio link failure occurs in the layer 1 forwarding node, and optimizing a reestablishment process. Through sending, to the first base station, of the information about the list of the UEs served by the layer 1 forwarding node and/or the context information of the all or some UEs served by the layer 1 forwarding node, the first base station may be enabled to obtain the information related to the UEs served by the layer 1 forwarding node, and use the information to configure the UEs, thereby reducing radio link connection reestablishment time of the UEs served by the layer 1 forwarding node, and thus reducing service interruption time of the UEs.

Optionally, the first request includes second information, and the second information includes at least one of the following: an identifier of the MT unit of the layer 1 forwarding node and an identifier of the layer 1 forwarding node.

In some embodiments, the first request is optionally a context request. For example, when a selected target cell belongs to the first base station that is different from the second base station, the layer 1 forwarding node may send the identifier of the MT unit of the layer 1 forwarding node, for example, a C-RNTI, and/or the ID of the layer 1 forwarding node to the first base station during radio link connection reestablishment. After that, the first base station may send the received C-RNTI and/or ID of the layer 1 forwarding node to the second base station through a context request, to request the context information of the layer 1 forwarding node. After receiving the context request that is based on the C-RNTI and/or the ID of the layer 1 forwarding node, the second base station sends the context information of the MT unit and/or the context information of the forwarding unit to the first base station.

Optionally, the context information of the MT unit may include at least one of the following:
context information used for configuring a physical channel for controlling the forwarding unit; and
beam configuration information that is of the forwarding unit controlled by the second base station and that is for forwarding an SSB and/or a CSI-RS.

Optionally, the context information of the forwarding unit may include at least one of the following:
capability information of the forwarding unit;
configuration information of the forwarding unit; and
processing delay information of the layer 1 forwarding node.

Optionally, the capability information of the forwarding unit may include at least one of the following:
at least one of a quantity of reflecting elements, a quantity of horizontal reflection channels, and a quantity of vertical reflection channels that are of a reflection panel of the forwarding unit;
a total quantity of reflection channels of a reflection panel of the forwarding unit;
a range of an oblique angle of incidence of an incoming wave that is able to be effectively reflected by the forwarding unit;
reflection gain information of a reflection panel of the forwarding unit;
at least one of a quantity of antenna units, a quantity of horizontal radio frequency channels, and a quantity of vertical radio frequency channels that are of a forwarding antenna panel of the forwarding unit;
a total quantity of radio frequency channels of a forwarding antenna panel of the forwarding unit;
forwarding gain range information of the forwarding unit; and
operating frequency range information of the forwarding unit.

Optionally, the configuration information of the forwarding unit may include at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit.

Optionally, the topology information of the forwarding network in which the layer 1 forwarding node is located may include at least one of the following:
all or some context information of an upstream layer 1 forwarding node of the layer 1 forwarding node; and
all or some context information of a downstream layer 1 forwarding node of the layer 1 forwarding node.

Optionally, in a case that the layer 1 forwarding node has the downstream layer 1 forwarding node and/or upstream layer 1 forwarding node, the first information may further include at least one of the following:
the context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node.

Optionally, the context information of the all or some UEs includes first indication information, where the first indication information is used to indicate the identifier of the layer 1 forwarding node. Alternatively, in a case that the first information includes the context information of the all or some UEs, the first information further includes second indication information, where the second indication information is used to indicate the identifier of the layer 1 forwarding node.

Optionally, the context information of the all or some UEs includes parameter information of a forwarded beam used for serving the all or some UEs.

FIG. 6 is a flowchart of a radio link failure processing method according to an embodiment of this application. The method is performed by a layer 1 forwarding node. As shown in FIG. 6, the method includes the following steps.

Step 61: The layer 1 forwarding node determines that a radio link failure occurs.

In this embodiment, the layer 1 forwarding node may monitor quality of a radio link. When the quality of the radio link becomes unable to meet a minimum communication quality requirement of the layer 1 forwarding node, the radio link is determined to be unavailable, that is, the radio link is determined to fail. After determining that the radio link fails, the layer 1 forwarding node may reselect a cell and reestablish a radio link connection.

Step 62: The layer 1 forwarding node performs a first operation.

Optionally, the first operation may include at least one of the following:
selecting a target cell according to a preset rule;
during radio link connection reestablishment, sending second information to a target base station, where the second information includes at least one of the following: an identifier of an MT unit of the layer 1 forwarding node and an identifier of the layer 1 forwarding node; the target base station may be a serving base station before the radio link failure occurs in the layer 1 forwarding node, or may be a new serving base station; in this way, information related to the layer 1 forwarding node may be obtained based on the received second information, and the information is used to configure the layer 1 forwarding node, thereby reducing time for radio link connection reestablishment performed after the radio link failure occurs in the layer 1 forwarding node, and optimizing a reestablishment process;
stopping forwarding behavior of a forwarding unit of the layer 1 forwarding node; and
after a target cell is selected, forwarding a signal of the target cell by using a forwarding unit of the layer 1 forwarding node.

Optionally, the preset rule includes at least one of the following:
in a case that a cell found through a search includes one cell belonging to a second base station, the one cell belonging to the second base station is used as the target cell;
in a case that cells found through a search include a plurality of cells belonging to a second base station, a cell with strongest received signals and/or best quality of received signals in the plurality of cells belonging to the second base station is used as the target cell; and
in a case that a cell found through a search includes a first cell and signal strength of the first cell is greater than a first threshold, the first cell is used as the target cell, where the first threshold may be set depending on an actual requirement, and this is not limited.

The second base station is the serving base station before the radio link failure occurs in the layer 1 forwarding node, and the first cell is a serving cell before the radio link failure occurs in the layer 1 forwarding node. Thus, selecting the target cell according to the preset rule may prevent, when the layer 1 forwarding node serves UE, a cell handover for the UE and prevent a cell handover between base stations for the UE, thereby preventing an excessively long time of a service interruption of the UE.

In some embodiments, after the radio link failure occurs, the MT unit of the layer 1 forwarding node may perform a cell search. If a cell found by the MT unit of the layer 1 forwarding node includes one cell belonging to the original serving base station, the cell belonging to the original serving base station is preferentially selected as the target cell for radio link connection reestablishment. If the MT unit of the layer 1 forwarding node finds a plurality of available cells belonging to the original serving base station, a cell with strongest received signals and/or best quality of received signals in the plurality of available cells belonging to the original serving base station is selected as the target cell for radio link connection reestablishment. If a plurality of available cells found by the MT unit of the layer 1 forwarding node include the original serving cell, and signal strength of the original serving cell is greater than the first threshold, the original serving cell is selected for radio link connection reestablishment.

In some embodiments, after the MT unit determines the RLF, if the MT unit and the forwarding unit are at a same frequency, it may be considered that an incident beam from the original serving cell is quite weak and a reflected beam is also quite weak. In this case, if the forwarding unit continues the forwarding behavior, because effective target signal reflection cannot be produced due to a weak incident signal, unnecessary interference and noise are generated. Therefore, to prevent generation of noise and interference, the forwarding behavior of the forwarding unit should be stopped. For example, for an NCR node, forwarding by an RU may be suspended; for an RIS node, a reflection panel may be adjusted to a diffuse reflection state, or a preset beam control parameter may be used to control a reflected beam to point to an area that UE does not reach. The preset beam control parameter may be pre-configured by a base station or configured by an operation administration and maintenance (Operation Administration and Maintenance, OAM) server.

Optionally, after the layer 1 forwarding node selects the target cell, the forwarding unit may forward the signal of the target cell by itself. When the signal of the target cell is an SSB, the forwarding a signal of the target cell by using a forwarding unit of the layer 1 forwarding node may include at least one of the following:
in a case that the reselected target cell is different from the first cell, before new forwarding configuration information about a cell discovery signal (for example, an SSB/PBCH or a CSI-RS) is received, forwarding, by the layer 1 forwarding node by using the forwarding unit thereof, the SSB of the target cell according to default SSB forwarding configuration information; in this way, the SSB may be forwarded as soon as possible, so that UE under coverage of the layer 1 forwarding node may be enabled to find, as soon as possible, a cell capable of providing a service;
in a case that the selected target cell is the first cell, before new SSB forwarding configuration information is received, forwarding, by the layer 1 forwarding node by using the forwarding unit thereof, the SSB of the target cell according to SSB forwarding configuration information that has been received from the first cell, where the first cell is the serving cell before the radio link failure occurs in the layer 1 forwarding node; and
after reestablishing a radio link connection to the target cell is completed, forwarding, by the layer 1 forwarding node by using the forwarding unit thereof, the SSB of the target cell according to SSB forwarding configuration information received from the target cell.

Optionally, the default SSB forwarding configuration information may be preset depending on an SSB forwarding requirement, and may include but is not limited to at least one of the following: information about the SSB that needs to be forwarded, a first forwarded beam precoding matrix, a first power amplification factor, and a first power spectrum density.

Optionally, when the signal of the target cell is a signal other than an SSB, the forwarding a signal of the target cell by using a forwarding unit of the layer 1 forwarding node may include forwarding, by the layer 1 forwarding node by using the forwarding unit thereof, the received signal of the target cell according to default forwarding configuration information. The default forwarding configuration information may be preset depending on a requirement for forwarding the corresponding signal, and may include at least one of the following: a second forwarded beam precoding matrix, a second power amplification factor, a second power spectrum density, and the like.

The radio link failure processing method provided in this embodiment of this application may be performed by a radio link failure processing apparatus. In the embodiments of this application, an example in which the radio link failure processing apparatus performs the radio link failure processing method is used to describe the radio link failure processing apparatus provided in the embodiments of this application.

FIG. 7 is a diagram of a structure of a radio link failure processing apparatus 70 according to an embodiment of this application. The apparatus is applied to a first base station, and the first base station is a serving base station after a radio link failure occurs in a layer 1 forwarding node. As shown in FIG. 7, the radio link failure processing apparatus 70 includes:
a first receiving module 71, configured to receive a radio link connection establishment request from the layer 1 forwarding node; and
an obtaining module 72, configured to obtain first information based on the radio link connection establishment request, where the first information includes at least one of the following:
   context information of a mobile terminal MT unit of the layer 1 forwarding node;
   context information of a forwarding unit of the layer 1 forwarding node;
   topology information of a forwarding network in which the layer 1 forwarding node is located;
   information about a list of UEs served by the layer 1 forwarding node; and
   context information of all or some UEs served by the layer 1 forwarding node.

Optionally, the obtaining module 72 is configured to send a first request to a second base station. The first request is used to obtain the first information, and the second base station is a serving base station before the radio link failure occurs in the layer 1 forwarding node.

Optionally, the first request includes second information, and the second information includes at least one of the following: an identifier of the MT unit of the layer 1 forwarding node and an identifier of the layer 1 forwarding node.

Optionally, the first receiving module 71 is further configured to receive the second information from the layer 1 forwarding node.

Optionally, the obtaining module 72 is configured to obtain the first information based on the radio link connection establishment request and the second information. The second information includes the at least one of the following: the identifier of the MT unit of the layer 1 forwarding node and the identifier of the layer 1 forwarding node.

Optionally, the context information of the MT unit includes at least one of the following:
context information used for configuring a physical channel for controlling the forwarding unit of the layer 1 forwarding node; and
beam configuration information that is of the forwarding unit of the layer 1 forwarding node controlled by the second base station and that is for forwarding a synchronization signal block SSB and/or a channel state information-reference signal CSI-RS.

Optionally, the context information of the forwarding unit includes at least one of the following:
capability information of the forwarding unit;
configuration information of the forwarding unit; and
processing delay information of the layer 1 forwarding node.

Optionally, the capability information of the forwarding unit includes at least one of the following:
at least one of a quantity of reflecting elements, a quantity of horizontal reflection channels, and a quantity of vertical reflection channels that are of a reflection panel of the forwarding unit;
a total quantity of reflection channels of a reflection panel of the forwarding unit;
a range of an oblique angle of incidence of an incoming wave that is able to be effectively reflected by the forwarding unit;
reflection gain information of a reflection panel of the forwarding unit;
at least one of a quantity of antenna units, a quantity of horizontal radio frequency channels, and a quantity of vertical radio frequency channels that are of a forwarding antenna panel of the forwarding unit;
a total quantity of radio frequency channels of a forwarding antenna panel of the forwarding unit;
forwarding gain range information of the forwarding unit; and
operating frequency range information of the forwarding unit.

Optionally, the configuration information of the forwarding unit includes at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit.

Optionally, the topology information of the forwarding network in which the layer 1 forwarding node is located includes at least one of the following:
all or some context information of an upstream layer 1 forwarding node of the layer 1 forwarding node; and
all or some context information of a downstream layer 1 forwarding node of the layer 1 forwarding node.

Optionally, in a case that the layer 1 forwarding node has the downstream layer 1 forwarding node and/or upstream layer 1 forwarding node, the first information further includes at least one of the following:
the context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node.

Optionally, the context information of the all or some UEs includes first indication information, where the first indication information is used to indicate the identifier of the layer 1 forwarding node.

Alternatively, in a case that the first information includes the context information of the all or some UEs, the first information further includes second indication information, where the second indication information is used to indicate the identifier of the layer 1 forwarding node.

Optionally, the context information of the all or some UEs includes parameter information of a forwarded beam used for serving the all or some UEs.

Optionally, the first receiving module 72 is further configured to receive a radio link connection request from first UE.

The radio link failure processing apparatus 70 further includes a configuration module, configured to: in a case that the first base station has received context information of the first UE, configure the first UE based on the context information of the first UE; or in a case that the first base station does not receive context information of the first UE, request the context information of the first UE from the second base station, and configure the first UE based on the context information of the first UE. The second base station is the serving base station before the radio link failure occurs in the layer 1 forwarding node.

Optionally, in a case that the first information does not include the context information of the all or some UEs, the processing apparatus 70 further includes:
a request module, configured to: when the first base station requires context information of second UE served by the layer 1 forwarding node, request the context information of the second UE from the second base station.

The radio link failure processing apparatus 70 provided in this embodiment of this application can implement the processes implemented by the method embodiment in FIG. 4, and the same technical effects are achieved. To avoid repetition, details are not described herein again.

FIG. 8 is a diagram of a structure of a radio link failure processing apparatus 80 according to an embodiment of this application. The apparatus is applied to a second base station, and the second base station is a serving base station before a radio link failure occurs in a layer 1 forwarding node. As shown in FIG. 8, the radio link failure processing apparatus 80 includes:
a second receiving module 81, configured to receive a first request from a first base station, where the second base station is the serving base station before the radio link failure occurs in the layer 1 forwarding node, and the first base station is a serving base station after the radio link failure occurs in the layer 1 forwarding node; and
a sending module 82, configured to send first information to the first base station.

The first information includes at least one of the following:
context information of an MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

Optionally, the first request includes second information, and the second information includes at least one of the following: an identifier of the MT unit of the layer 1 forwarding node and an identifier of the layer 1 forwarding node.

Optionally, the context information of the MT unit includes at least one of the following:
context information used for configuring a physical channel for controlling the forwarding unit; and
beam configuration information that is of the forwarding unit controlled by the second base station and that is for forwarding a synchronization signal block SSB and/or a channel state information-reference signal CSI-RS.

Optionally, the context information of the forwarding unit includes at least one of the following:
capability information of the forwarding unit;
configuration information of the forwarding unit; and
processing delay information of the layer 1 forwarding node.

Optionally, the capability information of the forwarding unit includes at least one of the following:
at least one of a quantity of reflecting elements, a quantity of horizontal reflection channels, and a quantity of vertical reflection channels that are of a reflection panel of the forwarding unit;
a total quantity of reflection channels of a reflection panel of the forwarding unit;
a range of an oblique angle of incidence of an incoming wave that is able to be effectively reflected by the forwarding unit;
reflection gain information of a reflection panel of the forwarding unit;
at least one of a quantity of antenna units, a quantity of horizontal radio frequency channels, and a quantity of vertical radio frequency channels that are of a forwarding antenna panel of the forwarding unit;
a total quantity of radio frequency channels of a forwarding antenna panel of the forwarding unit;
forwarding gain range information of the forwarding unit; and
operating frequency range information of the forwarding unit.

Optionally, the configuration information of the forwarding unit includes at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit.

Optionally, the topology information of the forwarding network in which the layer 1 forwarding node is located includes at least one of the following:
all or some context information of an upstream layer 1 forwarding node of the layer 1 forwarding node; and
all or some context information of a downstream layer 1 forwarding node of the layer 1 forwarding node.

Optionally, in a case that the layer 1 forwarding node has the downstream layer 1 forwarding node and/or upstream layer 1 forwarding node, the first information further includes at least one of the following:
the context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node.

Optionally, the context information of the all or some UEs includes first indication information, where the first indication information is used to indicate the identifier of the layer 1 forwarding node.

Alternatively, in a case that the first information includes the context information of the all or some UEs, the first information further includes second indication information, where the second indication information is used to indicate the identifier of the layer 1 forwarding node.

Optionally, the context information of the all or some UEs includes parameter information of a forwarded beam used for serving the all or some UEs.

The radio link failure processing apparatus 80 provided in this embodiment of this application can implement the processes implemented by the method embodiment in FIG. 5, and the same technical effects are achieved. To avoid repetition, details are not described herein again.

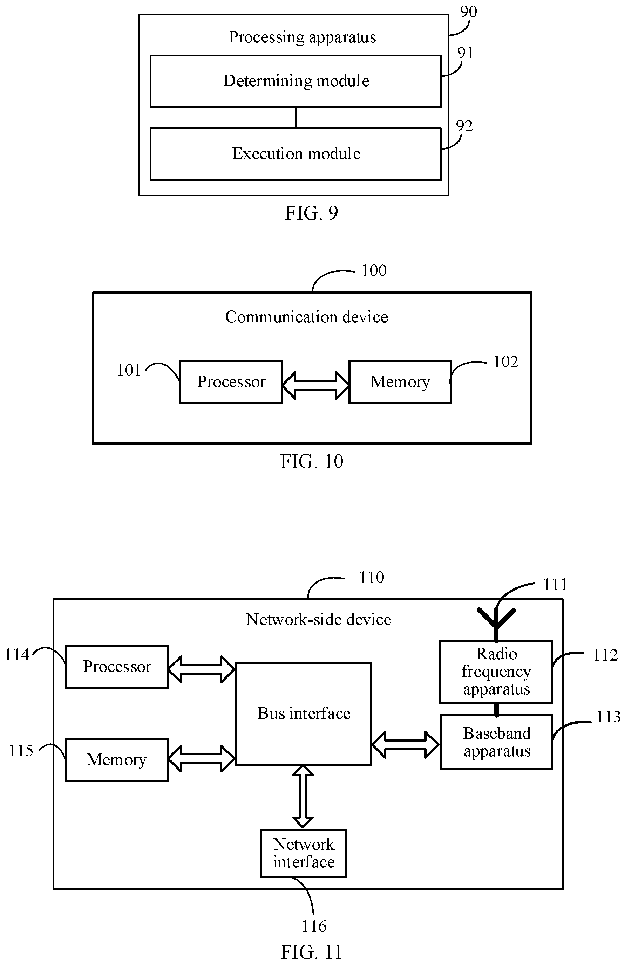

FIG. 9 is a diagram of a structure of a radio link failure processing apparatus 90 according to an embodiment of this application. The apparatus is applied to a layer 1 forwarding node. As shown in FIG. 9, the radio link failure processing apparatus 90 includes:
a determining module 91, configured to determine that a radio link failure occurs; and
an execution module 92, configured to perform a first operation.

The first operation includes at least one of the following:
selecting a target cell according to a preset rule;
during radio link connection reestablishment, sending second information to a target base station, where the second information includes at least one of the following: an identifier of an MT unit of the layer 1 forwarding node and an identifier of the layer 1 forwarding node;
stopping forwarding behavior of a forwarding unit of the layer 1 forwarding node; and
after a target cell is selected, forwarding a signal of the target cell by using a forwarding unit of the layer 1 forwarding node.

Optionally, the preset rule includes at least one of the following:
in a case that a cell found through a search includes one cell belonging to a second base station, the one cell belonging to the second base station is used as the target cell;
in a case that cells found through a search include a plurality of cells belonging to a second base station, a cell with strongest received signals and/or best quality of received signals in the plurality of cells belonging to the second base station is used as the target cell; and
in a case that a cell found through a search includes a first cell and signal strength of the first cell is greater than a first threshold, the first cell is used as the target cell.

The second base station is a serving base station before the radio link failure occurs in the layer 1 forwarding node, and the first cell is a serving cell before the radio link failure occurs in the layer 1 forwarding node.

Optionally, when the signal of the target cell is an SSB, the execution module 92 is configured to perform at least one of the following:
in a case that the selected target cell is different from the first cell, before new SSB forwarding configuration information is received, forward, by using the forwarding unit of the layer 1 forwarding node, the SSB of the target cell according to default SSB forwarding configuration information, where the first cell is the serving cell before the radio link failure occurs in the layer 1 forwarding node;
in a case that the selected target cell is the first cell, before new SSB forwarding configuration information is received, forward, by using the forwarding unit of the layer 1 forwarding node, the SSB of the target cell according to SSB forwarding configuration information that has been received from the first cell; and
after reestablishing a radio link connection to the target cell is completed, forward, by using the forwarding unit of the layer 1 forwarding node, the SSB of the target cell according to SSB forwarding configuration information received from the target cell.

Optionally, the default SSB forwarding configuration information includes at least one of the following: information about the SSB that needs to be forwarded, a first forwarded beam precoding matrix, a first power amplification factor, and a first power spectrum density.

Optionally, when the signal of the target cell is a signal other than the SSB, the execution module 92 is configured to forward, by using the forwarding unit of the layer 1 forwarding node, the received signal of the target cell according to default forwarding configuration information. The default forwarding configuration information includes at least one of the following: a second forwarded beam precoding matrix, a second power amplification factor, and a second power spectrum density.

The radio link failure processing apparatus 90 provided in this embodiment of this application can implement the processes implemented by the method embodiment in FIG. 6, and the same technical effects are achieved. To avoid repetition, details are not described herein again.

Optionally, as shown in FIG. 10, an embodiment of this application further provides a communication device 100, including a processor 101 and a memory 102. The memory 102 stores a program or instructions capable of running on the processor 101. For example, when the communication device 100 is a first base station and when the program or the instructions are executed by the processor 101, the steps in the embodiment shown in FIG. 4 are implemented, and the same technical effects can be achieved; when the communication device 100 is a second base station and when the program or the instructions are executed by the processor 101, the steps in the embodiment shown in FIG. 5 are implemented, and the same technical effects can be achieved; or when the communication device 100 is a layer 1 forwarding node and when the program or the instructions are executed by the processor 101, the steps in the embodiment shown in FIG. 6 are implemented, and the same technical effects can be achieved. To avoid repetition, details are not described herein again.

An embodiment of this application further provides a network-side device, including a processor and a communication interface. For example, when the network-side device is a first base station, the communication interface is configured to: receive a radio link connection establishment request from a layer 1 forwarding node, and obtain first information based on the radio link connection establishment request; when the network-side device is a second base station, the communication interface is configured to: receive a first request from a first base station, and send first information to the first base station, where the first information includes at least one of the following: context information of an MT unit of a layer 1 forwarding node, context information of a forwarding unit of a layer 1 forwarding node, topology information of a forwarding network in which a layer 1 forwarding node is located, information about a list of UEs served by a layer 1 forwarding node, and context information of all or some UEs served by a layer 1 forwarding node; or when the network-side device is a layer 1 forwarding node, the processor is configured to: determine that a radio link failure occurs, and perform a first operation. The first operation includes at least one of the following: selecting a target cell according to a preset rule; during radio link connection reestablishment, sending second information to a target base station, where the second information includes at least one of the following: an identifier of an MT unit of the layer 1 forwarding node and an identifier of the layer 1 forwarding node; stopping forwarding behavior of a forwarding unit of the layer 1 forwarding node; and after a target cell is selected, forwarding a signal of the target cell by using a forwarding unit of the layer 1 forwarding node. The network-side device embodiments correspond to the foregoing method embodiments. The implementation processes and the implementations of the foregoing method embodiments may all be applicable to the network-side device embodiments, and the same technical effects can be achieved. To avoid repetition, details are not described herein again.

Specifically, this embodiment of this application further provides a network-side device. As shown in FIG. 11, a network-side device 110 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes information to be sent, and sends the information to the radio frequency apparatus 112. The radio frequency apparatus 112 processes the received information, and sends the information through the antenna 111.

The methods performed by the network-side device in the foregoing embodiment may be implemented in the baseband apparatus 113. The baseband apparatus 113 includes a baseband processor.

The baseband apparatus 113 may include, for example, at least one baseband board. A plurality of chips are disposed on the baseband board. As shown in FIG. 11, one of the chips is, for example, the baseband processor, which is connected to the memory 115 through a bus interface to invoke a program in the memory 115 to perform the network device operations shown in the foregoing method embodiments.

The network-side device may further include a network interface 116. The interface is, for example, a common public radio interface (common public radio interface, CPRI).

Specifically, the network-side device 110 in this embodiment of the present invention further includes instructions or the program stored in the memory 115 and capable of running on the processor 114. The processor 114 invokes the instructions or the program in the memory 115 to perform the method performed by the modules shown in FIG. 7, FIG. 8, or FIG. 9, and the same technical effects are achieved. To avoid repetition, details are not described herein again.

An embodiment of this application further provides a readable storage medium. The readable storage medium stores a program or instructions. When the program or the instructions are executed by a processor, the processes in the foregoing radio link failure processing method embodiments are implemented, and the same technical effects can be achieved. To avoid repetition, details are not described herein again.

The processor is the processor in the UE described in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing radio link failure processing method embodiments, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing radio link failure processing method embodiments, and the same technical effects can be achieved. To avoid repetition, details are not described herein again.

An embodiment of this application further provides a communication system, including a first base station, a second base station, and a layer 1 forwarding node. The first base station may be configured to perform the steps of the radio link failure processing method described in FIG. 4, the second base station may be configured to perform the steps of the radio link failure processing method described in FIG. 5, and the layer 1 forwarding node may be configured to perform the steps of the radio link failure processing method described in FIG. 6. The first base station is a serving base station after a radio link failure occurs in the layer 1 forwarding node, and the second base station is a serving base station before the radio link failure occurs in the layer 1 forwarding node.

It should be noted that the term "include", "comprise", or any other variation thereof in this specification is intended to cover a non-exclusive inclusion, so that a process, a method, an article, or an apparatus that includes a list of elements not only includes those elements but also includes other elements that are not expressly listed, or further includes elements inherent to the process, method, article, or apparatus. In absence of more constraints, an element preceded by "includes a ..." does not preclude existence of other identical elements in the process, method, article, or apparatus that includes the element. In addition, it should be noted that in the scope of the method and apparatus in embodiments of this application, an order in which functions are performed is not limited to the shown or discussed order, and may further include an order in which the functions are substantially performed at the same time or a reverse order, depending on the related functions. For example, the described method may be performed in an order different from the described order, and steps may be added, omitted, or combined. In addition, features described with reference to some examples may be combined in other examples.

According to the descriptions of the foregoing implementations, a person skilled in the art can clearly understand that the method in the foregoing embodiments may be implemented by software and a necessary universal hardware platform or by hardware only. In most cases, the former is a more preferred implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc), and includes several instructions to enable UE (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are only illustrative rather than restrictive. Inspired by this application, a person of ordinary skill in the art can still derive a plurality of variations without departing from the essence of this application and the protection scope of the claims. All these variations shall fall within the protection of this application.

## Claims

1. A radio link failure processing method, comprising:
receiving, by a first base station, a radio link connection establishment request from a layer 1 forwarding node; and
obtaining, by the first base station, first information based on the radio link connection establishment request, wherein the first information comprises at least one of the following:
context information of a mobile terminal MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

2. The method according to claim 1, wherein the obtaining first information based on the radio link connection establishment request comprises:
sending, by the first base station, a first request to a second base station, wherein the first request is used to obtain the first information, and the second base station is a serving base station before a radio link failure occurs in the layer 1 forwarding node.

3. The method according to claim 2, wherein the first request comprises second information, and the second information comprises at least one of the following: an identifier of the MT unit of the layer 1 forwarding node and an identifier of the layer 1 forwarding node.

4. The method according to claim 3, wherein before the sending a first request to a second base station, the method further comprises:
receiving, by the first base station, the second information from the layer 1 forwarding node.

5. The method according to claim 1, wherein the obtaining first information based on the radio link connection establishment request comprises:
obtaining, by the first base station, the first information based on the radio link connection establishment request and second information, wherein the second information comprises at least one of the following: an identifier of the MT unit of the layer 1 forwarding node and an identifier of the layer 1 forwarding node.

6. The method according to any one of claims 1 to 5, wherein the context information of the MT unit comprises at least one of the following:
context information used for configuring a physical channel for controlling the forwarding unit of the layer 1 forwarding node; and
beam configuration information that is of the forwarding unit of the layer 1 forwarding node controlled by the second base station and that is for forwarding a synchronization signal block SSB and/or a channel state information-reference signal CSI-RS.

7. The method according to any one of claims 1 to 5, wherein the context information of the forwarding unit comprises at least one of the following:
capability information of the forwarding unit;
configuration information of the forwarding unit; and
processing delay information of the layer 1 forwarding node.

8. The method according to claim 7, wherein the capability information of the forwarding unit comprises at least one of the following:
at least one of a quantity of reflecting elements, a quantity of horizontal reflection channels, and a quantity of vertical reflection channels that are of a reflection panel of the forwarding unit;
a total quantity of reflection channels of a reflection panel of the forwarding unit;
a range of an oblique angle of incidence of an incoming wave that is able to be effectively reflected by the forwarding unit;
reflection gain information of a reflection panel of the forwarding unit;
at least one of a quantity of antenna units, a quantity of horizontal radio frequency channels, and a quantity of vertical radio frequency channels that are of a forwarding antenna panel of the forwarding unit;
a total quantity of radio frequency channels of a forwarding antenna panel of the forwarding unit;
forwarding gain range information of the forwarding unit; and
operating frequency range information of the forwarding unit.

9. The method according to claim 7, wherein the configuration information of the forwarding unit comprises at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit.

10. The method according to any one of claims 1 to 5, wherein the topology information of the forwarding network in which the layer 1 forwarding node is located comprises at least one of the following:
all or some context information of an upstream layer 1 forwarding node of the layer 1 forwarding node; and
all or some context information of a downstream layer 1 forwarding node of the layer 1 forwarding node.

11. The method according to any one of claims 1 to 5, wherein in a case that the layer 1 forwarding node has a downstream layer 1 forwarding node and/or an upstream layer 1 forwarding node, the first information further comprises at least one of the following:
context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node.

12. The method according to any one of claims 1 to 5, wherein the context information of the all or some UEs comprises first indication information, wherein the first indication information is used to indicate the identifier of the layer 1 forwarding node; or
in a case that the first information comprises the context information of the all or some UEs, the first information further comprises second indication information, wherein the second indication information is used to indicate the identifier of the layer 1 forwarding node.

13. The method according to any one of claims 1 to 5, wherein the context information of the all or some UEs comprises parameter information of a forwarded beam used for serving the all or some UEs.

14. The method according to claim 1, wherein the method further comprises:
receiving, by the first base station, a radio link connection request from first UE; and
in a case that the first base station has received context information of the first UE, configuring, by the first base station, the first UE based on the context information of the first UE; or in a case that the first base station does not receive context information of the first UE, requesting, by the first base station, the context information of the first UE from a second base station, and configuring the first UE based on the context information of the first UE, wherein the second base station is a serving base station before a radio link failure occurs in the layer 1 forwarding node.

15. The method according to claim 1, wherein in a case that the first information does not comprise the context information of the all or some UEs, the method further comprises:
when the first base station requires context information of second UE served by the layer 1 forwarding node, requesting, by the first base station, the context information of the second UE from a second base station, wherein the second base station is a serving base station before a radio link failure occurs in the layer 1 forwarding node.

16. A radio link failure processing method, comprising:
receiving, by a second base station, a first request from a first base station, wherein the second base station is a serving base station before a radio link failure occurs in a layer 1 forwarding node, and the first base station is a serving base station after the radio link failure occurs in the layer 1 forwarding node; and
sending, by the second base station, first information to the first base station, wherein
the first information comprises at least one of the following:
context information of an MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

17. The method according to claim 16, wherein the first request comprises second information, and the second information comprises at least one of the following: an identifier of the MT unit of the layer 1 forwarding node and an identifier of the layer 1 forwarding node.

18. The method according to claim 16 or 17, wherein the context information of the MT unit comprises at least one of the following:
context information used for configuring a physical channel for controlling the forwarding unit; and
beam configuration information that is of the forwarding unit controlled by the second base station and that is for forwarding a synchronization signal block SSB and/or a channel state information-reference signal CSI-RS.

19. The method according to claim 16 or 17, wherein the context information of the forwarding unit comprises at least one of the following:
capability information of the forwarding unit;
configuration information of the forwarding unit; and
processing delay information of the layer 1 forwarding node.

20. The method according to claim 19, wherein the capability information of the forwarding unit comprises at least one of the following:
at least one of a quantity of reflecting elements, a quantity of horizontal reflection channels, and a quantity of vertical reflection channels that are of a reflection panel of the forwarding unit;
a total quantity of reflection channels of a reflection panel of the forwarding unit;
a range of an oblique angle of incidence of an incoming wave that is able to be effectively reflected by the forwarding unit;
reflection gain information of a reflection panel of the forwarding unit;
at least one of a quantity of antenna units, a quantity of horizontal radio frequency channels, and a quantity of vertical radio frequency channels that are of a forwarding antenna panel of the forwarding unit;
a total quantity of radio frequency channels of a forwarding antenna panel of the forwarding unit;
forwarding gain range information of the forwarding unit; and
operating frequency range information of the forwarding unit.

21. The method according to claim 19, wherein the configuration information of the forwarding unit comprises at least one of the following:
a forwarding gain parameter of the forwarding unit;
an operating frequency parameter of the forwarding unit;
beamforming parameter configuration information of the forwarding unit;
a forwarding power parameter of the forwarding unit;
uplink and downlink slot configuration information of the forwarding unit; and
on/off pattern configuration information of the forwarding unit.

22. The method according to claim 16 or 17, wherein the topology information of the forwarding network in which the layer 1 forwarding node is located comprises at least one of the following:
all or some context information of an upstream layer 1 forwarding node of the layer 1 forwarding node; and
all or some context information of a downstream layer 1 forwarding node of the layer 1 forwarding node.

23. The method according to claim 16 or 17, wherein in a case that the layer 1 forwarding node has a downstream layer 1 forwarding node and/or an upstream layer 1 forwarding node, the first information further comprises at least one of the following:
context information of the downstream layer 1 forwarding node and/or upstream layer 1 forwarding node;
capability information of the downstream layer 1 forwarding node and/or upstream layer 1 forwarding node;
topology information of a forwarding network in which the downstream layer 1 forwarding node and/or upstream layer 1 forwarding node are/is located;
parameter information of a forwarded beam between the layer 1 forwarding node and the downstream layer 1 forwarding node and/or upstream layer 1 forwarding node; and
information about UE served by the downstream layer 1 forwarding node.

24. The method according to claim 16 or 17, wherein the context information of the all or some UEs comprises first indication information, wherein the first indication information is used to indicate the identifier of the layer 1 forwarding node; or
in a case that the first information comprises the context information of the all or some UEs, the first information further comprises second indication information, wherein the second indication information is used to indicate the identifier of the layer 1 forwarding node.

25. The method according to claim 16 or 17, wherein the context information of the all or some UEs comprises parameter information of a forwarded beam used for serving the all or some UEs.

26. A radio link failure processing method, comprising:
determining, by a layer 1 forwarding node, that a radio link failure occurs; and
performing, by the layer 1 forwarding node, a first operation, wherein
the first operation comprises at least one of the following:
selecting a target cell according to a preset rule;
during radio link connection reestablishment, sending second information to a target base station, wherein the second information comprises at least one of the following: an identifier of an MT unit of the layer 1 forwarding node and an identifier of the layer 1 forwarding node;
stopping forwarding behavior of a forwarding unit of the layer 1 forwarding node; and
after a target cell is selected, forwarding a signal of the target cell by using a forwarding unit of the layer 1 forwarding node.

27. The method according to claim 26, wherein the preset rule comprises at least one of the following:
in a case that a cell found through a search comprises one cell belonging to a second base station, the one cell belonging to the second base station is used as the target cell;
in a case that cells found through a search comprise a plurality of cells belonging to a second base station, a cell with strongest received signals and/or best quality of received signals in the plurality of cells belonging to the second base station is used as the target cell; and
in a case that a cell found through a search comprises a first cell and signal strength of the first cell is greater than a first threshold, the first cell is used as the target cell, wherein
the second base station is a serving base station before the radio link failure occurs in the layer 1 forwarding node, and the first cell is a serving cell before the radio link failure occurs in the layer 1 forwarding node.

28. The method according to claim 26, wherein when the signal of the target cell is an SSB, the forwarding a signal of the target cell by using a forwarding unit of the layer 1 forwarding node comprises at least one of the following:
in a case that the selected target cell is different from a first cell, before new SSB forwarding configuration information is received, forwarding, by the layer 1 forwarding node by using the forwarding unit thereof, the SSB of the target cell according to default SSB forwarding configuration information;
in a case that the selected target cell is a first cell, before new SSB forwarding configuration information is received, forwarding, by the layer 1 forwarding node by using the forwarding unit thereof, the SSB of the target cell according to SSB forwarding configuration information that has been received from the first cell; and
after reestablishing a radio link connection to the target cell is completed, forwarding, by the layer 1 forwarding node by using the forwarding unit thereof, the SSB of the target cell according to SSB forwarding configuration information received from the target cell, wherein
the first cell is a serving cell before the radio link failure occurs in the layer 1 forwarding node.

29. The method according to claim 28, wherein the default SSB forwarding configuration information comprises at least one of the following: information about the SSB that needs to be forwarded, a first forwarded beam precoding matrix, a first power amplification factor, and a first power spectrum density.

30. The method according to claim 26, wherein when the signal of the target cell is a signal other than an SSB, the forwarding a signal of the target cell by using a forwarding unit of the layer 1 forwarding node comprises:
forwarding, by the layer 1 forwarding node by using the forwarding unit thereof, the received signal of the target cell according to default forwarding configuration information, wherein the default forwarding configuration information comprises at least one of the following: a second forwarded beam precoding matrix, a second power amplification factor, and a second power spectrum density.

31. A radio link failure processing apparatus, comprising:
a first receiving module, configured to receive a radio link connection establishment request from a layer 1 forwarding node; and
an obtaining module, configured to obtain first information based on the radio link connection establishment request, wherein the first information comprises at least one of the following:
context information of a mobile terminal MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

32. A radio link failure processing apparatus, comprising:
a second receiving module, configured to receive a first request from a first base station, wherein a second base station is a serving base station before a radio link failure occurs in a layer 1 forwarding node, and the first base station is a serving base station after the radio link failure occurs in the layer 1 forwarding node; and
a sending module, configured to send first information to the first base station, wherein
the first information comprises at least one of the following:
context information of an MT unit of the layer 1 forwarding node;
context information of a forwarding unit of the layer 1 forwarding node;
topology information of a forwarding network in which the layer 1 forwarding node is located;
information about a list of UEs served by the layer 1 forwarding node; and
context information of all or some UEs served by the layer 1 forwarding node.

33. A radio link failure processing apparatus, comprising:
a determining module, configured to determine that a radio link failure occurs; and
an execution module, configured to perform a first operation, wherein
the first operation comprises at least one of the following:
selecting a target cell according to a preset rule;
during radio link connection reestablishment, sending second information to a target base station, wherein the second information comprises at least one of the following: an identifier of an MT unit of a layer 1 forwarding node and an identifier of a layer 1 forwarding node;
stopping forwarding behavior of a forwarding unit of a layer 1 forwarding node; and
after a target cell is selected, forwarding a signal of the target cell by using a forwarding unit of a layer 1 forwarding node.

34. A communication device, comprising a processor and a memory, wherein the memory stores a program or instructions capable of running on the processor, and when the program or the instructions are executed by the processor, the steps of the radio link failure processing method according to any one of claims 1 to 15, or the steps of the radio link failure processing method according to any one of claims 16 to 25, or the steps of the radio link failure processing method according to any one of claims 26 to 30 are implemented.

35. A readable storage medium, wherein the readable storage medium stores a program or instructions, and when the program or the instructions are executed by a processor, the steps of the radio link failure processing method according to any one of claims 1 to 15, or the steps of the radio link failure processing method according to any one of claims 16 to 25, or the steps of the radio link failure processing method according to any one of claims 26 to 30 are implemented.
